# EUROPÄISCHE PATENTSCHRIFT

(11) **EP 0 878 442 B1**
(45) Veröffentlichungstag und Bekanntmachung des Hinweises auf die Patenterteilung: **04.02.2004**
(21) Anmeldenummer: 98107921.3
(22) Anmeldetag: 30.04.1998
(51) Int. Cl.: C01B 3/32

(54) **Reformierungsreaktor und Betriebsverfahren hierfür**
Reforming reactor and operating process thereof
Réacteur de réformage et son procédé de mise en oeuvre

(30) Priorität: 15.05.1997 DE 19720294
(43) Veröffentlichungstag der Anmeldung: 18.11.1998
(73) Patentinhaber: Ballard Power Systems AG, 73230 Kirchheim / Teck-Nabern (DE)
(72) Erfinder: Schüssler, Martin, 89077 Ulm (DE); zur Megede, Detlef, Dr., 89347 Bubesheim (DE)
(74) Vertreter: Beyer, Andreas, Dr.

(56) Entgegenhaltungen:
- WO-A-89/02054
- DE-A- 2 614 673
- GB-A- 2 132 108
- US-A- 3 798 005
- DATABASE WPI Section Ch, Week 9404 Derwent Publications Ltd., London, GB; Class E36, AN 94-031049 XP002076650 & JP 05 337 358 A (ISHIKAWAJIMA HARIMA HEAVY IND)

## Beschreibung

Die Erfindung bezieht sich auf einen Reformierungsreaktor mit einer Reaktionszone, in der sich ein Ref ormierungskatalysator befindet und der ein zu reformierendes, kohlenwasserstoffhaltiges Gasgemisch zuführbar ist.

Ein gegenwärtig zunehmend an Bedeutung gewinnendes Anwendungsgebiet sind brennstoffzellenbetriebene Kraftfahrzeuge, in denen Reaktoren dieser Art zur Wasserstoffgewinnung aus flüssig mitgeführtem Methanol eingesetzt werden, um den von den Brennstoffzellen benötigten Wasserstoff bereitzustellen. Dabei kann das Methanol je nach Prozeßbedingungen durch eine endotherme Wasserdampfreformierung oder eine exotherme partielle Oxidation oder z.B. als autothermer Prozeß durch eine Kombination beider Reaktionen in das wasserstoffreiche Reformatgas umgesetzt werden. Der Einfachheit halber soll vorliegend der Begriff Reformierung auch die partielle Oxidation des Methanols oder eines anderen verwendeten Kohlenwasserstoffs umfassen.

Die an der Reformierungsreaktion beteiligten flüssigen Komponenten werden vor Eintritt in die Reaktionszone verdampft. Üblicherweise erfolgt dies entweder in einem dem Reaktor vorgeschalteten, separaten Verdampfer oder in einem von der Reaktionszone räumlich getrennten, vorgeschalteten, beheizten Reaktorbereich. Der Eintrag der Gasgemischkomponenten in diesen Verdampferbereich kann z.B. durch Ultraschallzerstäubung erfolgen. Eine andere herkömmliche Methode besteht in der vollständigen Verbrennung eines flüssigen Kohlenwasserstoffs und Verdampfung von später zudosiertem Brennstoff bzw. Wasser durch die heißen Verbrennungsprodukte. Die Schwierigkeiten dieser herkömmlichen Methoden liegen vor allem in der ungenauen Kontrolle des Verdampfungsvorgangs, die zu unvollständiger Verdampfung, d.h. Tropfenbildung, zu Pulsationen, hohem Druckabfall und hohen Wärmeverlusten im Fall indirekter Beheizung sowie zu träger Dynamik führen kann. Diese Effekte sind z.B. auf dem Anwendungsgebiet brennstoffzellenbetriebener Kraftfahrzeuge unvorteilhaft. Aus Platzgründen und wegen der für den Kraftfahrzeugbetrieb typischen, raschen und häufigen Lastwechsel ist für diesen Einsatzzweck ein Reaktortyp mit kompaktem Aufbau erwünscht, der schnell auf Lastwechsel reagiert.

In der Patentschrift US 3.798.005 ist ein Reaktor zur Erzeugung eines wasserstoffreichen Gases durch katalytische Oxidation von vorzugsweise längerkettigen Kohlenwasserstoffen, wie C₆H₁₄ und C₈H₁₈, beschrieben. Der Reaktor besteht aus mindestens zwei unter Belassung eines Zwischenraums beabstandet hintereinanderliegenden Sinterblöcken, in die ein jeweils geeignetes Katalysatormaterial eingebracht ist. Wenigstens der in Strömungsrichtung erste katalysatorbelegte Sinterblock ist zur katalytischen Oxidation des Kohlenwasserstoffs ausgelegt, während wenigstens der in Strömungsrichtung letzte Sinterblock als Shiftstufe zur Umwandlung von Kohlenmonoxid in Kohlendioxid ausgelegt ist. Die katalytische Oxidation erfolgt typischerweise bei relativ hohen Temperaturen zwischen 900°C und 1650°C, während die CO-Umwandlungsreaktion bei Temperaturen zwischen etwa 150°C und 500°C erfolgt. Das für die CO-Umwandlungsreaktion benötigte Wasser wird als Wasserdampf in die Zwischenräume vor einem jeweiligen Shiftstufen-Sinterblock eingespritzt. Vor dem in Strömungsrichtung ersten, katalysatorbelegten Sinterblock befindet sich ein Mischungsraum, in den über eine Einspritzleitung der umzusetzende Kohlenwasserstoff sowie über einen eintrittsseitigen, katalysatorfreien Sinterblock ein Luftstrom zugeführt werden, dessen Sauerstoffmenge so eingestellt wird, daß die anschließende katalytische Oxidation als unvollständige, flammenfreie Verbrennung abläuft. Der Luftstrom wird im Gegenstrom an der Außenseite eines Reaktormantels zugeführt und auf diese Weise von dessen Abwärme vorerhitzt, während zur Vorerhitzung des umzusetzenden Kohlenwasserstoffs und des eingespritzten Wassers ein Rohrleitungskomplex dient, der ausgangsseitig im Reaktor angeordnet ist und dadurch vom noch heißen Reaktionsgas umströmt wird.

In der Offenlegungsschrift DE 33 45 958 A1 sind ein Methanolreformierungsreaktor zur Erzeugung von Wasserstoff in einem brennstoffzellenbetriebenen Kraftfahrzeug und ein Betriebsverfahren hierfür offenbart, bei dem vor einem anschließenden Dauerbetrieb eine spezielle Startphase vorgesehen ist. In dieser Startphase wird flüssiges Methanol in einer von einer Reformierungsreaktionszone separierten Verbrennungskammer des Reaktors verbrannt. Das heiße Verbrennungsgas strömt durch eine Verbrennungsgaskammer, die über eine wärmeleitfähige Wandung mit der Reformierungsreaktionszone in wärmeübertragender Verbindung steht und dadurch das dort befindliche Katalysatormaterial indirekt aufheizt. Zudem wird das Verbrennungsgas nach Passieren der Verbrennungsgaskammer durch die Reformierungsreaktionszone hindurch zurückgeführt und heizt so den Katalysator zusätzlich direkt auf. Wenn die Reaktionszone auf diese Weise ihre Betriebstemperatur erreicht hat, wird die Methanolverbrennung beendet und ein Heißgasventil umgeschaltet, um das Verbrennungsgas aus dem System zu entfernen, während im nun beginnenden Dauerbetrieb ein Methanol/Wasserdampf-Gemisch zur Wasserdampfreformierung des Methanols in die Reaktionszone eingeleitet wird. Ein zur Aufrechterhaltung der Beheizung der Reaktionszone dienender Brenner wird im Dauerbetrieb des Reaktors mit dem Wasserstoffüberschuß aus den Brennstoffzellen betrieben.

Aus der Offenlegungsschrift JP 5-337358 (A) ist ein Reformierungsreaktor in Plattenbauweise bekannt, bei dem eine Verteilkammer unter Zwischenfügung einer Brennstoffverteilplatte an eine Verbrennungskammer laminiert ist. Die Verteilplatte ist mit einer großen Zahl von Verteilöffnungen versehen. In der Verbrennungskammer wird ein Brennstoff/Luft-Gemisch verbrannt, wobei die Luft über eine entsprechende Luftzufuhrleitung direkt in die Verbrennungskammer geleitet wird, während der Brennstoff über eine entsprechende Brennstoffzufuhrleitung in die Verteilkammer und von dort über die Öffnungen in der Verteilplatte in die Verbrennungskammer gelangt. Um eine Rückströmung von der Verbrennungskammer in die Verteilkammer zu verhindern, kann über eine Zweigleitung mit ansteuerbarem Ventil ein Teil des Luftstroms in die Brennstoffzufuhrleitung eingespeist und dort mit dem zugeführten Brennstoff vorgemischt werden.

In der Patentschrift DE 37 29 114 C2 ist ein katalytischer Oxidationsreaktor für zündfähige Gasgemische beschrieben, bei dem eine gasdurchlässige, einen geeigneten Oxidationskatalysator aufweisende erste Schicht in einem mit einem Kühlmedium in Verbindung stehenden Reaktionsraum angeordnet ist und auf einer dem zugeführten Gasgemisch zugewandten Seite mit einer gasdurchlässigen zweiten Schicht versehen ist. Auf ihrer der zweiten Schicht gegenüberliegenden Seite ist die erste Schicht mit einer gas- und flüssigkeitsundurchlässigen, mit dem Kühlmedium in thermischem Kontakt stehenden dritten Schicht abgedeckt. Das umzusetzende Gasgemisch gelangt durch die zweite Schicht hindurch in die erste Schicht, wo unter der Wirkung des Katalysators die Oxidationsreaktion stattfindet. Die entstehenden Reaktionskomponenten, z.B. Wasserdampf im Fall einer Sauerstoff/Wasserstoff-Umsetzung, werden dann im Gegenstrom aus der ersten Schicht heraus durch die zweite Schicht hindurchgeleitet und anschließend abgeführt. Die zweite, vorzugsweise porös ausgeführte Schicht fungiert als Diffusionssperrschicht, die nur eine dosierte, vorbestimmte Gasgemischmenge zur ersten Schicht gelangen läßt, und ist aus schlecht wärmeleitendem Material gebildet, damit die Wärmeabfuhr vorwiegend über die dritte Schicht zum Kühlmedium hin erfolgt.

Der Erfindung liegt als technisches Problem die Bereitstellung eines Reformierungsreaktors und eines Betriebsverfahrens hierfür zur Reformierung eines kohlenwasserstoff haltigen Gasgemischs zugrunde, die sich besonders für Anwendungen eignen, bei denen ein kompakter Reaktoraufbau und eine hohe Reaktordynamik gefordert sind, speziell für mobile Anwendungen, wie brennstoffzellenbetriebene Kraftfahrzeuge. Dabei soll der Begriff Kohlenwasserstoff der Einfachkeit halber auch Kohlenwasserstoffderivate umfassen, wie Methanol.

Die Erfindung löst dieses Problem durch die Bereitstellung eines Reformierungsreaktors mit den Merkmalen des Anspruchs 1 sowie eines Betriebsverfahrens hierfür mit den Merkmalen des Anspruchs 4.

Der Reaktor nach Anspruch 1 beinhaltet einen an die Reaktionszone flächig angrenzenden Verdampferkörper, der mit poröser, wärmeleitfähiger Struktur so ausgelegt ist, daß er in der Lage ist, die ihm zugeführten Komponenten des zu reformierenden Gasgemischs zu vermischen und verdampfen und als solchermaßen homogenes, verdampftes Gemisch flächig verteilt über die betreffende Grenzfläche in die Reaktionszone einzuspeisen. Durch diese Integration des Verdampfers in den Reaktor ist ein besonders kompakter Reaktoraufbau möglich. Durch die wärmeleitfähige Auslegung der Verdampferkörperstruktur kann in Fällen, in denen im angrenzenden Bereich der Reaktionszone eine exotherme Reaktion abläuft, überschüssige Wärme aus der Reaktionszone durch Festkörperwärmeleitung sehr effektiv und gleichmäßig in den Verdampferkörper eingebracht und dort für den Verdampfungsvorgang genutzt werden. Dieser Wärmetransport über Festkörperwärmeleitung ist gegenüber einem Wärmetransport über die Gasphase deutlich effektiver. Da der Verdampferkörper direkt an die Reformierungsreaktionszone angrenzt und das zu reformierende Gasgemisch homogen und flächig in die Reaktionszone einspeist, ergeben sich sehr kurze Wärmetransportwege, geringe Wärmekapazitäten und eine gute räumliche Homogenität der Reaktionsprodukte, wodurch der Reaktor eine vergleichsweise hohe Dynamik besitzt und somit sehr rasch auf Lastwechsel zu reagieren vermag.

Bei einem nach Anspruch 2 weitergebildeten Reaktor ist die Reaktionszone von einem Reaktionskörper mit poröser, wärmeleitfähiger Struktur gebildet, der festkörperwärmeleitend mit dem Verdampferkörper verbunden ist und den Reformierungskatalysator in Form einer Oberflächenschicht beinhaltet. Diese Oberflächenschicht kann verglichen mit den typischen Durchmessern von Pellets üblicher Katalysatorschüttungen merklich dünner sein, wodurch erreicht wird, daß keine Überhitzung des Katalysatormaterials auftritt und sich die gesamte Katalysatormasse für die Reformierungsreaktion nutzen läßt, da das zu reformierende Gasgemisch durch Diffusion in die gesamte, relativ geringe Tiefe der Schicht eindringen kann. Vorteilhafterweise kann der Reaktionskörper mit dem Verdampferkörper eine einstückige, poröse, wärmeleitfähige Struktur bilden, bei der nur der den Reaktionskörper bildende Teil mit der Katalysatorschicht versehen ist.

Bei einem nach Anspruch 3 weitergebildeten Reaktor ist eine spezielle Zuleitungsplatte vorgesehen, mit der sich die Komponenten des zu reformierenden Gasgemischs relativ gleichmäßig verteilt einer Eintrittsfläche des Verdampferkörpers zuführen lassen, was die Vermischungsfunktion des Verdampferkörpers unterstützt.

Bei dem Betriebsverfahren nach Anspruch 4 ist eine spezielle Startphase für den Reformierungsreaktor vorgesehen, in der ein oxidierbares, kohlenwasserstoffhaltiges Material in den Verdampferkörper als ein die poröse Struktur benetzender Flüssigkeitsfilm eingebracht und ein sauerstoffhaltige Gas derart zugeführt werden, daß der in die Gasphase übergehende Teil des kohlenwasserstoffhaltigen Materials vom Verdampferkörper in die Reaktionszone gelangt und dort katalytisch verbrannt wird, wobei die Oxidation aufgrund des speziellen Reaktoraufbaus flächig unter Vermeidung von Überhitzungsstellen und damit der Zündung einer nicht mehr flammenfreien, homogenen Verbrennung erfolgt. Dieser Verbrennungsvorgang kann bei Bedarf auch während des anschließenden Dauerbetriebs weitergeführt werden. Die in der Reaktionszone entstehende Verbrennungswärme wird sehr effektiv über Festkörperwärmeleitung in den Verdampferkörper eingebracht und führt zur beschleunigten Verdampfung des dort flüssig eingebrachten, kohlenwasserstoffhaltigen Materials. Sobald der Verdampferkörper eine bestimmte Temperatur erreicht hat, bei der sich die Komponenten des zu reformierenden Gasgemischs verdampfen lassen, werden diese in den Verdampferkörper so eingeleitet, daß ihre vollständige Verdampfung sichergestellt ist und ein kontrollierter Temperaturanstieg sowie eine gleichmäßige Temperaturverteilung erfolgt, was sich gemäß Anspruch 5 vorzugsweise durch kontrollierte Erhöhung der Zudosierung des zu reformierenden Gasgemischs und/oder durch eine gesteuerte Wasserzugabe und/oder eine geeignete Steuerung des Luft/Treibstoff-Verhältnisses für die katalytische Verbrennung erreichen läßt. Im anschließenden Dauerbetrieb werden dann die flüssigen und gasförmigen Komponenten des zu reformierenden Gasgemischs, z.B. flüssiges oder bereits ganz oder teilweise gasförmiges Methanol und Wasser sowie ggf. ein sauerstoffhaltiges Gas, wie Luft, in den Verdampferkörper eingeleitet.

Bei einem nach Anspruch 6 weitergebildeten Betriebsverfahren werden die Reaktionsbedingungen im Dauerbetrieb des Reaktors so eingestellt, daß in der Reaktionszone wenigstens in einem an den Verdampferkörper angrenzenden Bereich eine exotherme Reaktion stattfindet, z.B. eine partielle Oxidation von Methanol. Die Reaktionswärme kann über Festkörperwärmeleitung sehr effektiv in den Verdampferkörper eingebracht werden und deckt dort den zur Bereitung des zu reformierenden Gasgemischs, insbesondere zur Verdampfung und/oder Überhitzung der beteiligten, ggf. flüssigen Gemischkomponenten, benötigten Wärmebedarf. Das Einhalten dieser Reaktionsbedingungen gewährleistet eine optimale Verdampfung in allen Betriebszuständen und damit auch ein sehr gutes dynamisches Verhalten bei Lastwechseln.

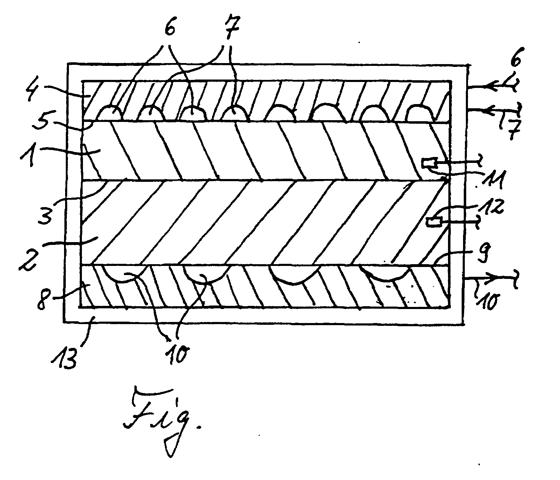

Eine vorteilhafte Ausführungsform der Erfindung ist in der Zeichnung dargestellt und wird nachfolgend beschrieben.

Die einzige Figur zeigt eine schematische Längsschnittansicht eines z.B. zur Wasserdampfreformierung von Methanol geeigneten Reaktors.

Der in der Figur gezeigte Reaktor kann beispielsweise zur Wasserdampfreformierung von Methanol in einem brennstoffzellenbetriebenen Kraftfahrzeug eingesetzt werden, um den für die Brennstoffzellen benötigten Wasserstoff aus flüssig mitgeführtem Methanol zu erzeugen. Der schichtförmig aufgebaute Reaktor beinhaltet einen Verdampferkörper in Form einer Verdampferschicht 1, die von einer porösen, metallischen und damit gut wärmeleitfähigen Matrix gebildet ist. Die poröse Verdampferschicht 1 verursacht nur einen relativ geringen Druckabfall und ist an einer Breitseite fest mit einer als Reformierungsreaktionszone dienenden Katalysatorschicht 2 verbunden, die ebenfalls von einer porösen, metallischen Matrix gebildet ist, wobei Verdampferschicht 1 und Katalysatorschicht 2 von einer einzigen, durchgehenden porösen Matrix gebildet sein können. Es ergibt sich daher eine entsprechend große Ausdehnung der zugehörigen Grenzfläche 3, über die das in der Verdampferschicht 1 bereitete, zu reformierende Gasgemisch gleichmäßig flächig verteilt in die Katalysatorschicht 2, d.h. in die Reaktionszone, eintreten kann. Durch die poröse Verdampferschicht 1 wird vor dem mit Katalysatormaterial belegten Bereich, d.h. der Katalysatorschicht 2, eine turbulente Strömung der Gasgemischkomponenten erzeugt, wodurch deren Konzentration vor den reaktionsaktiven Stellen erhöht wird, so daß sich höchstens eine kleine Verarmungszone bildet. Die Katalysatorschichtmatrix 2 ist mit einer im Vergleich zu den typischen Durchmessern üblicher Pellets von Katalysatorschüttungen dünnen Oberflächenschicht eines herkömmlichen, die Wasserdampfreformierung von Methanol katalysierenden Materials belegt. Wegen der großen Oberfläche der porösen Katalysatorschichtmatrix 2 ergibt sich eine große wirksame Katalysatorfläche, die zudem wegen ihrer relativ geringen Dickenausdehnung zuverlässig vor Überhitzungseffekten geschützt ist und in ihrer gesamten Tiefe durch Diffusion des zu reformierenden Gasgemischs für die Reformierungsreaktion nutzbar ist.

Zur Bereitung des zu reformierenden Gasgemischs werden die beteiligten flüssigen und/oder gasförmigen Komponenten über eine Zuleitungsplatte 4 einer Eintrittsfläche 5 der Verdampferschicht 1 zugeleitet, die von deren der Verdampferschicht-Katalysatorschicht-Grenzfläche 3 gegenüberliegenden Breitseite gebildet ist. Die Zuleitungsplatte 3 besitzt zwei separate Zuleitungskanalstrukturen 6, 7, von denen die eine zur Zuführung der flüssigen und die andere zur Zuführung der gasförmigen Komponenten dient. So können zur Wasserdampfreformierung von Methanol eine flüssige Methanol/Wasser-Mischung über die eine Kanalstruktur 6 und Luft oder ein anderer sauerstoffhaltiger Gasstrom über die andere Kanalstruktur 7 zugeführt werden. Vorteilhafterweise sind die zuführenden Kanalstrukturen 6, 7 mit zur Eintrittsfläche 5 der Verdampferschicht 1 hin offenen Kanälen ausgebildet. Dabei bilden die beiden Kanalstrukturen 6, 7 eine Reihe länglicher Kanalzweige in der Ebene der Eintrittsfläche 5 der Verdampferschicht 1 derart, daß die Kanalzweige der beiden Kanalstrukturen 6, 7 alternierend aufeinanderfolgen. Dadurch können die verschiedenen Gasgemischkomponenten bereits verhältnismäßig gleichförmig über die Eintrittsfläche 5 hinweg verteilt in die Verdampferschicht 1 eingebracht werden.

Die Zuführung der Edukte muß nicht auf diese Weise in getrennten Kanälen erfolgen. Es ist in anderen Ausführungsformen der Erfindung auch möglich, ein gemeinsames Verteilungssystem für alle Edukte zu nutzen. Flüssige Edukte können dann beispielsweise als kleinste Tröpfchen eines Sprays/Nebels mit dem Gasstrom eingebracht werden.

An die der Verdampferschicht-Katalysatorschicht-Grenzfläche 3 gegenüberliegende, als Austrittsseite fungierende Breitseite 9 der Katalysatorschicht 2 grenzt eine Auslaßplatte 8 an, die mit einer zu der Katalysatorschicht-Austrittsfläche 9 hin offenen Auslaßkanalstruktur 10 versehen ist, über die das reagierte Reformatgas austrittsseitig der Katalysatorschicht 2 gesammelt und aus dem Reaktor abgeführt wird. Sowohl in der Verdampferschicht 1 als auch in der Katalysatorschicht 2 ist je ein Temperatursensor 11, 12 vorgesehen, wobei je nach Bedarf auch noch mehr Temperatursensoren in diesen Schichten 1, 2 und/oder den angrenzenden Platten 4, 8 vorgesehen sein können. Ein Reaktorgehäuse 13 umschließt als Außenhaut den beschriebenen Reaktoraufbau.

Bei einem bevorzugten Betriebsverfahren für den gezeigten Reaktor wird zwischen einer Startphase bei noch nicht betriebswarmem Reaktor und dem Dauerbetrieb unterschieden. In der Startphase wird zuerst ein flüssiger Brennstoff in die Verdampferschicht 1 derart eingebracht, daß er einen deren poröse Struktur benetzenden Flüssigkeitsfilm bildet. Dieser Brennstoff kann derselbe Kohlenwasserstoff wie der im späteren Dauerbetrieb reformierte, z.B. Methanol, oder ein davon verschiedener Kohlenwasserstoff sein. Durch anschließende Einleitung von Sauerstoff bzw. eines sauerstoffhaltigen Gases gelangt mit diesem Gasstrom bereits bei Raumtemperatur ein vom Dampfdruck des verwendeten Kohlenwasserstoffs abhängiger Teil desselben zur Verdampferschicht-Katalysatorschicht-Grenzfläche 3, wo sich folglich schnell ein zündfähiges Gasgemisch bildet. Nach Zündung des Gemischs durch den Katalysator der Katalysatorschicht 2 wird dort der in der Gasphase befindliche Kohlenwasserstoff katalytisch vollständig oxidiert. Wegen der flächigen Einbringung des Gasgemischs in die Katalysatorschicht 2 erfolgt diese katalytische Verbrennung ohne Auftreten von Überhitzungsstellen und ohne Zündung einer homogenen Verbrennung. Die entstehende Verbrennungswärme wird durch den Festkörperwärmeleitungskontakt zwischen Verdampferschicht 1 und Katalysatorschicht 2 sehr effektiv in die Verdampferschicht 1 geleitet, die sich dadurch aufheizt, so daß dort vermehrt Brennstoff aus dem Flüssigkeitsfilm verdampft und zwecks katalytischer Verbrennung zur Katalysatorschicht 2 gelangt. Der auf diese Weise bewirkte Kaltstart kann innerhalb weniger Sekunden erfolgen. In der porösen Matrix der Verdampferschicht 1 werden die Gasgemischkomponenten sehr gut vermischt, wobei zusätzlich die flüssigen Komponenten an der Matrixoberfläche verdampfen. Wegen der großen Wärmekontaktfläche und der großen Kontaktfläche zur Gasphase verläuft die Verdampfung sehr dynamisch und pulsationsfrei, ohne daß wegen Benetzung Tropfenbildung auftritt. Die gute Kaltstartfähigkeit wird weiter dadurch unterstützt, daß jeglicher Kontakt des Katalysatormaterials mit Brennstofftropfen vermieden wird.

Sobald auf diese Weise die Verdampferschicht 1 eine bestimmte, zur vollständigen Verdampfung der flüssigen Komponenten für die anschließende Reformierungsreaktion ausreichende Temperatur erreicht hat, werden die Komponenten des zu reformierenden Gasgemischs mit gesteuerter Dosis so zugeführt, daß ein kontrollierter Temperaturanstieg und eine gleichmäßige Temperaturverteilung unter Vermeidung von Überhitzungsstellen erfolgt. Dies wird u.a. auch durch die gesteuerte Zugabe von Wasser erreicht. Neben dem über die eine Kanalstruktur 6 in die Verdampferschicht 1 geleiteten Methanol/Wasser-Gemisch wird bei der Reformierung von Methanol vorzugsweise zudem ein sauerstoffhaltiger Gasstrom über die andere Kanalstruktur 7 während des nun nach Ende der Startphase beginnenden Dauerbetriebs in die Verdampferschicht 1 eingeleitet. Im Dauerbetrieb werden dadurch über die Zuleitungsplatte 4 die flüssige oder durch Nutzung von Abwärme dieses oder anderer Reaktoren im Gaserzeugungssystem schon wenigstens teilweise gasförmige Methanol/Wasser-Mischung und der sauerstoffhaltige Gasstrom in die Verdampferschicht 1 flächig eingeleitet und in deren poröser Struktur gleichmäßig verteilt, vermischt und verdampft. Das so bereitete Gasgemisch gelangt über die entsprechende Grenzfläche 3 in die Katalysatorschicht 2, wo es in ein wasserstoffreiches Gasgemisch sowohl mittels exothermer partieller Oxidation als auch mittels endothermer Wasserdampfreformierung des Methanols umgesetzt wird.

Insgesamt wird der Reaktionsvorgang im Dauerbetrieb derart exotherm eingestellt, daß die in der Gesamtbilanz überbleibende Reaktionswärme gerade zur vollständigen Verdampfung und Vorerwärmung der in die Verdampferschicht 1 eingeleiteten Gasgemischkomponenten ausreicht. Unter diesen Bedingungen wird eine optimale Verdampfung in allen Betriebszuständen, d.h. bei beliebigem Lastzustand erreicht. Dies ermöglicht in Verbindung mit dem kompakten Reaktoraufbau und den daraus resultierenden, kurzen Wärmetransportwegen, den geringen Wärmekapazitäten und der guten räumlichen Homogenität des in die Katalysatorschicht 2 flächig eingeleiteten Gasgemischs und des daraus entstehenden Reformatgases eine sehr gute Reaktordynamik mit kurzer Reaktionszeit bei Lastwechseln. Je nach Anwendungsfall kann der Reaktionsvorgang auch so eingestellt werden, daß noch mehr Reaktionswärme entsteht, die sich beispielsweise in strömungsabwärtigen Komponenten der Reaktoranlage nutzen läßt, z.B. zur Vorverdampfung des Methanol/Wasser-Gemischs, das dann im stationären Reaktorbetrieb schon in verdampfter Form in die Verdampferschicht 1 eintritt und dort mit dem sauerstoffhaltigen Gasstrom vermischt und flächig verteilt in die Katalysatorschicht 2 eingeleitet wird.

Bei Bedarf kann zur weiteren Beschleunigung des Kaltstartverhaltens im eingangsseitigen Bereich der Verdampferschicht 1 eine nicht gezeigte, elektrische Vorheizung integriert sein. Mit dieser kann dann der entsprechende Verdampferschichtbereich vor der Zuführung der Komponenten des zu reformierenden Gasgemischs mit großer elektrischer Leistung beheizt werden. Selbstverständlich kann die Vorheizung auch während des Dauerbetriebs zur Anwendung kommen, wenn hierfür Bedarf besteht.

## Patentansprüche

1. Reformierungsreaktor, insbesondere zur Wasserstoffgewinnung aus Methanol, mit
- einer Reaktionszone (2), in der sich ein Reformierungskatalysator befindet und der ein zu reformierendes, kohlenwasserstoffhaltiges, mehrkomponentiges Gasgemisch zuführbar ist,
**gekennzeichnet durch**
- einen an die Reaktionszone (2) flächig angrenzenden Verdampferkörper (1) und Zuleitungsmittel (4, 6, 7), die zur wenigstens teilweise flüssigen Zuleitung mehrerer Komponenten des zu reformierenden Gasgemisches zum Verdampferkörper eingerichtet sind, wobei der Verdampferkörper eine poröse, wärmeleitfähige Struktur aufweist, die zur vermischenden und verdampfenden Bereitung des zu reformierenden Gasgemischs aus den mehreren, ihm **durch** die Zuleitungsmittel zugeführten, gasgemischbildenden Komponenten und zur flächig verteilten Einspeisung des bereiteten Gasgemischs in die Reaktionszone über die zugehörige Verdampferkörper-Reaktionszone-Grenzfläche (3) während eines Reformierungsbetriebszustands geeignet ist.

2. Reformierungsreaktor nach Anspruch 1, weiter
**dadurch gekennzeichnet, daß**
die Reaktionszone von einem Reaktionskörper (2) mit poröser, wärmeleitfähiger Struktur gebildet ist, der festkörperwärmeleitend mit dem Verdampferkörper (1) verbunden ist und den Reformierungskatalysator in Form einer Oberflächenschicht beinhaltet.

3. Reformierungsreaktor nach Anspruch 1 oder 2, weiter
**gekennzeichnet durch**
eine Zuleitungsplatte (4), die an einer der Verdampferkörper-Reaktionszone-Grenzfläche (3) abgewandten Eintrittsfläche (5) des Verdampferkörpers (1) angeordnet ist und eine zu dieser Eintrittsfläche hin offene Kanalstruktur aufweist, die aus einem gemeinsamen Zuleitungskanal für alle Komponenten des zu reformierenden Gasgemischs oder aus mehreren getrennten Zuleitungskanälen (6, 7) mit über die Eintrittsfläche verteilten Kanalzweigen besteht.

4. Verfahren zum Betrieb eines Reformierungsreaktors nach einem der Ansprüche 1 bis 3, bei dem
- in einer Startphase ein oxidierbares, kohlenwasserstoffhaltiges Material in den Verdampferkörper (1) als ein dessen poröse Struktur benetzender Flüssigkeitsfilm eingebracht und ein sauerstoffhaltiges Gas derart zugeführt werden, daß der in die Gasphase übergehende Teil des kohlenwasserstoffhaltigen Materials in der Reaktionszone (2) katalytisch unter Abgabe von in den Verdampferkörper (1) geleiteter Wärme oxidiert wird, und
- nach Erreichen einer vorgebbaren Betriebstemperatur des Verdampferkörpers (1) in einem anschließenden Dauerbetrieb die Komponenten des zu reformierenden Gasgemischs dem Verdampferkörper zwecks Bereitung des zu reformierenden Gasgemischs und Einspeisung desselben in die Reaktionszone (2) zugeführt werden.

5. Verfahren nach Anspruch 4, weiter
**dadurch gekennzeichnet, daß**
während der Startphase das zu reformierende Gasgemisch dem Verdampferkörper mit einer zunehmenden, derart gesteuerten Menge zugeführt wird, daß stets ein vollständiger Reaktionsumsatz erhalten wird, und/oder das Verhältnis des sauerstoffhaltigen Gases und/oder von zudosierbarem Wasser zum kohlenwasserstoffhaltigen, katalytisch oxidierbaren Material zur Erzielung eines kontrollierten Temperaturanstiegs und einer gleichmäßigen Temperaturverteilung des Verdampferkörpers entsprechend variabel eingestellt wird.

6. Verfahren nach Anspruch 4 oder 5, weiter
**dadurch gekennzeichnet, daß**
in der Reaktionszone (2) wenigstens in einem an den Verdampferkörper (1) angrenzenden Bereich das zu reformierende Gasgemisch exotherm umgesetzt wird, wobei die Reaktionsbedingungen so eingestellt werden, daß die in den Verdampferkörper geleitete Reaktionswärme den Wärmebedarf zur Bereitung des zu reformierenden Gasgemischs deckt.

## Claims

1. Reforming reactor, especially for obtaining hydrogen from methanol, comprising
- a reaction zone (2) in which there is located a reforming catalyst and which is adapted to be supplied with a hydrocarbon-containing, multi-component gas mixture that is to be reformed,
**characterised by**
- a vaporiser body (1) adjoining the reaction zone (2) over its surface, and feed means (4, 6, 7) adapted to feed to the vaporiser body at least partly in liquid form several components of the gas mixture to be reformed, the vaporiser body having a porous, thermally conductive structure which is suitable for preparing the gas mixture to be reformed, by mixing and vaporisation, from the plurality of gas-mixture-forming components supplied to it by the feed means, and for feeding the prepared gas mixture, distributed over the surface, into the reaction zone via the associated vaporiser body/reaction zone interface (3) during a reforming operating state.

2. Reforming reactor according to claim 1, further **characterised in that** the reaction zone is formed by a reaction body (2) having a porous, thermally conductive structure, which reaction body (2) is connected to the vaporiser body (1) in a solid-state thermally conductive manner and contains the reforming catalyst in the form of a surface layer.

3. Reforming reactor according to claim 1 or 2, further **characterised by** a feed plate (4) arranged at an inlet surface (5) of the vaporiser body (1) facing away from the vaporiser body/reaction zone interface (3), which feed plate (4) has a conduit structure which is open towards the inlet surface and consists of a common feed conduit for all the components of the gas mixture to be reformed or of a plurality of separate feed conduits (6, 7) having conduit branches distributed over the inlet surface.

4. Method of operating a reforming reactor according to any one of claims 1 to 3, in which
- in a start-up phase, an oxidisable, hydrocarbon-containing material is introduced into the vaporiser body (1) in the form of a liquid film that wets the porous structure thereof, and an oxygen-containing gas is supplied in such a manner that the portion of the hydrocarbon-containing material that is converted to the gas phase is oxidised catalytically in the reaction zone (2) with the release of heat that is guided into the vaporiser body (1), and
- in a subsequent continuous operation, when the vaporiser body (1) has reached a predeterminable operating temperature, the components of the gas mixture to be reformed are supplied to the vaporiser body for the purpose of the preparation of the gas mixture to be reformed and the feeding thereof into the reaction zone (2).

5. Method according to claim 4, further **characterised in that**, during the start-up phase, the gas mixture to be reformed is supplied to the vaporiser body in an increasing amount which is so controlled that a complete reaction conversion is always obtained, and/or the ratio of the oxygen-containing gas and/or of water that can be metered in to the hydrocarbon-containing, catalytically oxidisable material is adjusted in an appropriately variable manner in order to achieve a controlled temperature rise and a uniform temperature distribution of the vaporiser body.

6. Method according to claim 4 or 5, further **characterised in that**, in the reaction zone (2), at least in a region adjoining the vaporiser body (1), the gas mixture to be reformed is reacted exothermically, the reaction conditions being so set that the heat of reaction guided into the vaporiser body covers the heat requirement for the preparation of the gas mixture to be reformed.

## Revendications

1. Réacteur de reformage destiné en particulier à la production d'hydrogène à partir de méthanol, comprenant
- une zone de réaction (2) dans laquelle se trouve un catalyseur de reformage et qui peut être alimentée en mélange gazeux à reformer constitué de plusieurs composants et renfermant un hydrocarbure,
**caractérisé par**
- une unité d'évaporation (1) contiguë par sa surface à la zone de réaction (2) et des moyens d'alimentation (4, 6, 7) conçus pour permettre l'amenée pour le moins partiellement liquide de plusieurs composants du mélange gazeux à reformer dans l'unité d'évaporation, cette dernière présentant une structure poreuse thermoconductrice qui, pendant un état de marche du réacteur de reformage, se prête à la préparation par mélange et par évaporation du mélange gazeux à reformer à partir des différents composants constituant le mélange gazeux et amenés dans l'unité d'évaporation par lesdits moyens d'alimentation, ainsi qu'à l'alimentation répartie sur la surface en mélange gazeux préparé de la zone de réaction via la surface connexe de limitation (3) entre l'unité d'évaporation et la zone de réaction.

2. Réacteur de reformage selon la revendication 1, **caractérisé en ce que** la zone de réaction est formée par une unité de réaction (2) avec une structure poreuse thermoconductrice qui est en contact de conduction thermique avec l'unité d'évaporation (1) et comprend le catalyseur de reformage se présentant sous la forme d'une couche superficielle.

3. Réacteur de reformage selon la revendication 1 ou 2,
**caractérisé par**
une plaque d'alimentation (4) qui est disposée sur une face d'entrée (5) de l'unité d'évaporation (1), laquelle face est située du côté opposé à la surface de limitation entre l'unité d'évaporation et la zone de réaction, et qui présente une structure de canal ouverte vers ladite face d'entrée, laquelle structure se compose d'un canal d'alimentation commun pour tous les composants du mélange gazeux à reformer ou de plusieurs canaux d'alimentation séparés (6, 7) avec des ramifications réparties sur la face d'entrée.

4. Procédé de mise en oeuvre d'un réacteur de reformage selon l'une des revendications 1 à 3, dans le cadre duquel
- dans une phase de démarrage, une matière oxydable renfermant un hydrocarbure est introduite dans l'unité d'évaporation (1) en tant que film liquide humidifiant la structure poreuse de cette dernière et un gaz contenant de l'oxygène est amené de sorte telle que, passant en phase gazeuse, la partie de la matière renfermant un hydrocarbure est oxydée par catalyse dans la zone de réaction (2) avec dégagement de chaleur conduite dans l'unité d'évaporation (1), et
- après atteinte d'une température de service prédéfinissable de l'unité d'évaporation (1) lors d'un fonctionnement durable, les composants du mélange gazeux à reformer sont acheminés dans l'unité d'évaporation en vue de la préparation du mélange gazeux à reformer et de l'introduction de celui-ci dans la zone de réaction (2).

5. Procédé selon la revendication 4,
**caractérisé en ce que**, pendant la phase de démarrage, le mélange gazeux à reformer est amené dans l'unité d'évaporation en quantité croissante dosée de sorte telle qu'on obtient toujours une transformation complète, et/ou le rapport entre le gaz contenant de l'oxygène et la matière contenant un hydrocarbure oxydable par catalyse et/ou le rapport entre l'eau dosable et la matière contenant un hydrocarbure oxydable par catalyse peut être régulé en conséquence de manière variable pour obtenir une augmentation contrôlée de la température ainsi qu'une répartition égale de la température dans l'unité d'évaporation.

6. Procédé selon la revendication 4 ou 5,
**caractérisé en ce que** le mélange gazeux à reformer est transformé par réaction exothermique dans la zone de réaction (2) pour le moins dans une zone contiguë à l'unité d'évaporation, les conditions de réaction pouvant être régulées de sorte telle que la chaleur de réaction introduite dans l'unité d'évaporation couvre le besoin en chaleur pour la préparation du mélange gazeux à reformer.
